# DEMANDE DE BREVET EUROPEEN

(11) **EP 1 914 157 A1**
(43) Date de publication de la demande: **23.04.2008**
(21) Numéro de dépôt: 06794036.1
(22) Date de dépôt: 20.06.2006
(51) Int. Cl.: B62K 19/16

(54) **CADRE DE BICYCLETTE**

(30) Priorité: 29.07.2005 ES 200501871
(71) Demandeur: Orbea, S. Coop. Ltda., 48269 Mallabia (Bizkaia) (ES)
(72) Inventeur: WEI LIN, Shu, 48269 Mallabia (Bizkaia) (ES)
(74) Mandataire: Urizar Barandiaran, Miguel Angel
(86) Numéro de dépôt international: PCT/ES2006/000361
(87) Numéro de publication internationale: WO 2007/017532

(57) **Abrégé**

Cadre de bicyclette, qui se compose d'un triangle arrière (t) assemblé à un quadrilatère avant (c) d'éléments tubulaires, avec un élément d'accouplement (A) commun pour les deux, qui est assemblé, par sa partie supérieure (4) et le triangle arrière (t) comprenant des entretoises supérieures (3), des entretoises inférieures (7) et l'élément de fermeture (2), qui est courbe et recouvre la roue arrière de la bicyclette, et l'axe (e2) de l'élément d'accouplement (A) étant approximativement coplanaire avec l'axe des entretoises supérieures (3), en formant un angle de confort (α) avec l'axe du tube supérieure (4) dont la valeur est égale ou supérieure à 120° : α > 120°.

## Description

L'objet de l'invention est un nouveau cadre de bicyclette.

Il existe de nombreux Brevets se rapportant à des cadres de bicyclettes, qui font partie de l'état actuel de la technique. On peut citer, entre autres, les dossiers WO056593, WO9911511, W09528314, EP0832813, les uns et les autres essayant d'améliorer l'aérodynamique et/ou la stabilité, ainsi que d'obtenir une utilisation maximale de l'effort du cycliste.

Dans cette ligne et dans une technologie récente, les Brevets US2002/0033586 et US2004/0046352 ont trait à des cadres de bicyclette dans lesquels une partie d'un élément tubulaire du cadre couvre une partie de la roue arrière, afin d'en améliorer l'aérodynamique.

Des problèmes et des inconvénients de cette structuration sont, entre autres:
- Le tube de la selle étant droit et vertical, n'est pas aligné par rapport à l'axe du pédalier, ce qui diminue drastiquement l'efficacité pendant le pédalage et la transmission des forces de l'ensemble cycliste-bicyclette.
- Trois tubes soudés confluent en un même point, ce qui provoque une concentration excessive de tensions, qui peuvent donner lieu à une rupture catastrophique, d'autant plus qu'il s'agit d'une zone où confluent des forces élevées, étant donné qu'ils supportent le poids du cycliste et sa force pendant qu'il pédale.
- Configuration excessivement rigide et peu commode. Il n'existe pas l'idée d'angle de confort.

L'objet de l'invention a trait à un nouveau cadre de bicyclette, qui se compose d'un triangle arrière assemblé à un quadrilatère avant composé d'éléments tubulaires, comprenant le quadrilatère avant d'un tube en tête auquel sont assemblés un tube supérieur, approximativement horizontal, et un tube inférieur incliné; un élément de fermeture qui est assemblé, dans sa partie inférieure, au tube inférieur et pour placer le pédalier au-dessus d'un élément d'accouplement, qui est assemblé par sa partie supérieure au tube supérieur et le triangle arrière comprenant des entretoises supérieures, des entretoises inférieures et l'élément de fermeture, qui est courbe et recouvre la roue arrière de la bicyclette, et l'axe de l'élément d'accouplement étant approximativement coplanaire avec l'axe des entretoises supérieures, en formant un angle (α) avec l'axe du tube supérieur ayant une valeur égale ou supérieure à 1 20° : α ≥ 1 20°.

Dans la zone d'assemblage de l'élément d'accouplement avec le tube supérieur, on dispose un tube de selle dont l'axe passe par le centre du pédalier.

En particulier, il s'agit d'un cadre de bicyclette monobloc en matériau composite qui résout le problème de la concentration des tensions. En outre:
- Le tube de la selle est en ligne avec le centre de l'axe du pe' dalier, ce qui permet une transmission complète et maximale de l'effort du coup de pédale, en maximisant le rendement de l'ensemble cycliste-bicyclette.
- Il existe trois portions de tube bien différenciées, qui constituent avec le reste du triangle avant une même et unique pièce (construction monocoque), fabriquée avec un matériau composite de carbone, ce qui réduit énormément le risque de rupture catastrophique dans la zone du noeud de la selle, car il n'y a pas de points de rencontre entre tubes ni cordons de soudure affaiblissant la structure et concentrant les tensions. Par conséquent, on peut affirmer qu'il s'agit d'une construction plus solide et plus durable que celles qui sont connues.
- Il y a un angle de confort (α) formé entre l'axe (e₂) de l'élément d'accouplement (A) et l'axe (e₃) du tube supérieur du cadre.
- Il y a un angle d'accouplement (β) formé entre l'axe (e₂) de l'élément d'accouplement (A) et la droite, qui relie le centre du pédalier au point d'intersection entre cet axe (e₂) et l'arc interne de l'élément de fermeture.
- Ces angles (α), (β) améliorent et accroissent le confort du cycliste quand il pédale, en permettant un certain degré de flexion et d'absorption des vibrations. Les deux angles (α), (β) peuvent varier de préférence de 5° environ, de la plus petite taille à la plus grande, pour maintenir le ratio rigidité-amortissement-absorption des vibrations et ce, indépendamment du poids et de la taille du cycliste.

Pour mieux comprendre l'objet de la présente invention, on représente sur les plans une forme préférentielle de réalisation pratique, susceptible de changements accessoires qui n'en dénaturent pas le fondement.

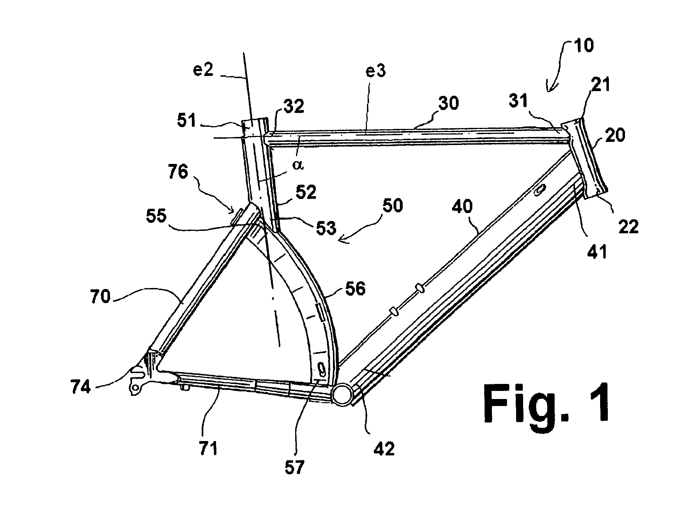

La figure 1 est una représentation schématique d'un cadre de bicyclette qui fait partie de l'état actuel de la technique (selon le Brevet US20040046352) où l'angle (α) entre les éléments tubulaires (30), (51) a été indiqué.

La figure 2 est una représentation schématique d'un cadre de bicyclette selon l'invention.

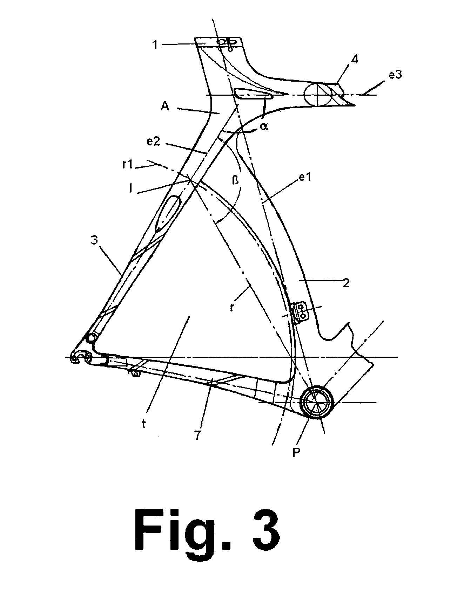

La figure 3 est une vue partielle de la figure 2, où l'angle d'accouplement (β) a également été signalé.

On décrit ci-dessous un exemple de réalisation pratique, non limitative, de la présente invention.

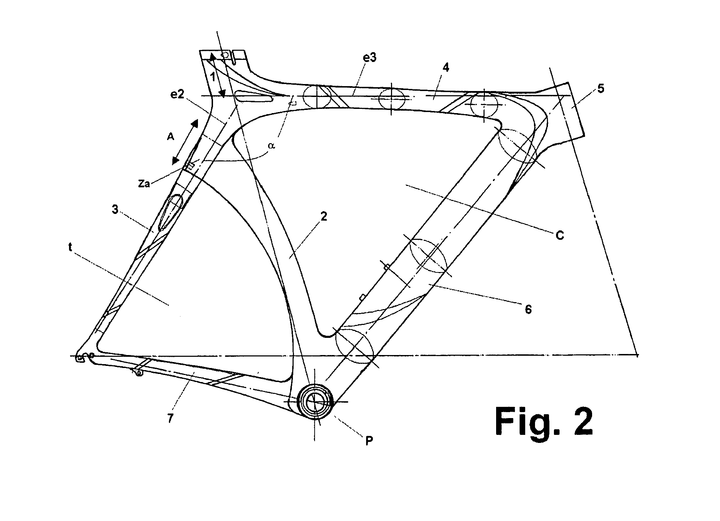

L'objet de l'invention est un nouveau cadre de bicyclette fabriqué dans une même et unique pièce en matériau composite (matériau composite de carbone), où sont clairement délimités (voir figure 2) un triangle arrière (t) et un quadrilatère avant (c) d'éléments tubulaires.

Le quadrilatère avant (c) se compose d'un tube en tête (5), auquel sont assemblés un tube supérieur (4) approximativement horizontal, un tube inférieur (6) incliné et un élément de fermeture (2). L'élément de fermeture (2) est assemblé, par sa partie inférieure, au tube incliné (6), pour situer le pédalier (P) dans cette zone d'union, et il s'assemble, par sa partie supérieure, à la zone inférieure (Z_{A}) d'un élément d'accouplement (A).

L'élément d'accouplement (A) est assemblé par sa partie supérieure au tube supérieur (4) et, par sa partie inférieure, aux entretoises (3) qui font partie du triangle arrière (t). Dans la zone d'assemblage de l'élément d'accouplement (A) au tube supérieur (4), on dispose le tube de la selle (1) dont l'axe (e₁) passe par le centre du pédalier (P).

Le triangle arrière (t) comprend lesdites entretoises supérieures (3), des entretoises inférieures (7) et l'élément de fermeture (2) lui-même -qui est commun au triangle arrière (t) et au quadrilatère avant (C)-.

L'élément de fermeture (2) est courbe et recouvre la roue arrière de la bicyclette.

L'axe (e₂) de l'élément d'accouplement (A) est à peu près coplanaire avec l'axe des entretoises supérieures (3) et forme un angle de confort (α) avec l'axe (e₃) du tube supérieur (4). Cet angle (α) est toujours égal ou supérieur à 120°, ce qui permet l'absorption des vibrations.

L'axe (e₂) de l'élément d'accouplement (A) et la droite (r) qui relie le centre du pédalier (P) au point d'intersection (I) entre cet axe (e₂) avec l'arc interne (r₁) de cet élément de fermeture (2) forment entre eux un angle d'accouplement (β). Cet angle d'accouplement (β) est variable en fonction de la taille, afin de maintenir constant le ratio rigidité-absorption/amortissement des vibrations indépendamment du poids et de la taille du cycliste.

L'angle d'accoupement (β) a une valeur comprise entre 120° et 140° : 120 ≤ (β) ≤ 140.

Avec cet angle d'accouplement (β), on complète les fonctions de l'angle de confort (α) d'absorption des vibrations et de sensation agréable en marche et lorsque l'utilisateur pédale.

## Revendications

1. Cadre de bicyclette, **caractérisé en ce qu'**il se compose d'un triangle arrière (t) assemblé à un quadrilatère avant (c) d'éléments tubulaires, comprenant le quadrilatère avant (c) d'un tube en tête (5) auquel sont assemblés un tube supérieur (4) approximativement horizontal et un tube inférieur (6) incliné ; un élément de fermeture (2) qui s'assemble par sa partie inférieure au tube inférieur (6) et pour situer le pédalier (P) par sa partie supérieure, à un élément d'accouplement (A) qui est assemblé, par sa partie supérieure, au tube supérieur (4) et le triangle arrière (t) comprenant des entretoises supérieures (3), des entretoises inférieures (7) et l'élément de fermeture (2), qui est courbe et recouvre la roue arrière de la bicyclette, et l'axe (e₂) de l'élément d'accouplement (A) étant à peu près coplanaire avec l'axe des entretoises supérieures (3), en formant un angle de confort (α) avec l'axe du tube supérieur (4) dont la valeur est égale ou supérieure à 120° : α ≥ 120°.

2. Cadre de bicyclette, selon la revendication antérieure, **caractérisé en ce que** dans la zone d'union de l'élément d'accouplement avec le tube supérieur (4), on dispose un tube de selle
(1) dont l'axe (e₁) passe par le centre du pédalier (P).

3. Cadre de bicyclette, selons les revendications antérieures, **caractérisé en ce que** l'axe (e₂) de l'élément d'accouplement (A) et la droite (r) qui relie le centre de la boîte du pédalier (P) et le point d'intersection (I) entre cet axe (e₂) avec l'arc interne de cet élément de fermeture (2) forment entre eux un angle d'accouplement (β).

4. Cadre de bicyclette, selon les revendications antérieures, **caractérisé en ce que** l'angle de confort (α) et l'angle d'accouplement (β) sont variables, en fonction de la taille, de 5° environ, afin de maintenir constant le ratio rigidité-absorption/amortissement des vibrations, indépendamment du poids et de la taille du cycliste.

5. Cadre de bicyclette, selon les revendications antérieures, **caractérisé en ce que** le cadre est un monobloc en matériau composite.
